# EUROPEAN PATENT APPLICATION

(11) **EP 4 711 823 A1**
(43) Date of publication of application: **18.03.2026**
(21) Application number: 23948170.8
(22) Date of filing: 25.08.2023
(51) Int. Cl.: G01T 1/29, G01T 1/202

(54) **HIGH-RESOLUTION COMPTON GAMMA CAMERA**

(30) Priority: 07.08.2023 CN 202310984290
(71) Applicant: University of Science and Technology of China, Anhui 230026 (CN)
(72) Inventor: ZHANG, Zhiyong, Hefei, Anhui 230026 (CN); ZHOU, Rui, Hefei, Anhui 230026 (CN); FENG, Changqing, Hefei, Anhui 230026 (CN); WANG, Yu, Hefei, Anhui 230026 (CN); ZHAO, Maoyuan, Hefei, Anhui 230026 (CN); LIU, Jianbei, Hefei, Anhui 230026 (CN); LIU, Shubin, Hefei, Anhui 230026 (CN); SHAO, Ming, Hefei, Anhui 230026 (CN); ZHOU, Yi, Hefei, Anhui 230026 (CN)
(74) Representative: Gleiss Große Schrell und Partner mbB
(86) International application number: PCT/CN2023/114816
(87) International publication number: WO 2025/030602

(57) **Abstract**

A high-resolution Compton gamma camera, relating to the technical field of gamma measurement, and comprising: a high-gas-pressure tank (1) provided with a window (2), a metal film (3) being sealedly provided at the window (2), and a plurality of flange interfaces (4) being formed on the side wall or the bottom of the high-gas-pressure tank (1); a time projection chamber detector (5) which is provided in the high-gas-pressure tank (1) and is used for implementing gamma ray Compton scattering conversion and three-dimensional trajectory and energy measurement of scattered electrons; and a gamma calorimeter (6) which is located between a field cage of the time projection chamber detector (5) and the inner wall of the high-gas-pressure tank (1) and is used for implementing position and energy measurement of Compton scattered gamma and electron leakage. The camera implements high-precision measurement of Compton scattered electrons and gamma, and accurate measurement of the gamma direction and energy, providing key technical support for applications such as astronomical observation and radiation therapy.

## Description

### TECHNICAL FIELD

The present disclosure relates to the technical field of gamma measurement, in particular to a high-resolution Compton gamma camera.

### BACKGROUND

The gamma (γ) ray in the energy range of 0.3 MeV -10 MeV encompasses characteristic spectral lines of major elements known to us, thus it is of great scientific and industrial application value to conduct precise measurement to it. In the existing astronomical observation experimental instruments, the observation sensitivity of γ ray in the MeV energy range is 2-3 orders of magnitude lower than rays in other energy ranges, which is an important observation window that needs to be researched and broken through urgently. In novel radiation therapy, such as proton radiation therapy, high-accuracy measurement of γ direction is the key to precisely position the range of proton beam rays. Moreover, in safety application of nuclear power, there is also a significant demand for high-accuracy positioning imaging of γ radiation source.

However, for a long time, the development of detection technology for γ ray in this energy range has been slow, the main reason is that the wavelength of γ ray in this energy range is too short to be focused with mirrors or lenses. Most incident photons only deposit part of their energy by Compton scattering, which poses challenges to accurately measuring their incident direction and total energy. The traditional Compton camera only measures a Compton scattering γ angle to obtain one of the two angles characterizing the direction of incident γ rays. Due to the lack of angular information of recoil electrons, it is impossible to achieve high-sensitivity observation of γ-ray source in the condition of massive background γ-ray contamination. Most of the traditional Compton camera measurement methods still use semiconductor or scintillator-based solid detectors to measure the top and bottom of Compton scattering, which cannot measure the initial track information of scattered electrons. The key angular resolution index of such measurement is only about 10°, which is far from meeting the requirements of scientific research and application. For example, in proton therapy, to achieve the positioning accuracy of millimeter level for the position of Bragg peak of the proton range, the detector needs to be placed particularly close to the patient's body and a large amount of event statistics is required, which cannot meet the needs of rapid imaging measurement in clinical medical treatment.

### SUMMARY

The present disclosure aims to provide a high-resolution Compton gamma camera to solve the problems in the prior art and achieve the high-accuracy measurement of Compton-scattered electrons and gamma ray, and the accurate measurement of gamma direction and energy, thus providing a key technical support for astronomical observation, radiation therapy, source term detection and other applications.

To achieve the objective above, the present disclosure employs the following technical solution:

The present disclosure provides a high-resolution Compton gamma camera, including a high-pressure tank, where the high-pressure tank is provided with a window, a metal film is hermetically arranged at the window, and a sidewall or bottom of the high-pressure tank is formed with a plurality of flange interfaces; a time projection chamber detector, where the time projection chamber detection is arranged inside the high-pressure tank, and configured to measure three-dimensional tracks and energy of electrons that are converted and scattered by gamma ray Compton scattering; and a gamma calorimeter, where the gamma calorimeter is located between a field cage of the time projection chamber detector and an inner wall of the high-pressure tank, and configured to measure leakage positions and energy of Compton-scattered gamma and electron.

Alternatively, the window is formed on one end of the high-pressure tank, and the metal film hermetically arranged at the window has a thickness of not more than 10 mm.

Alternatively, each of two symmetrical ends of the high-pressure tank is provided with the window, and the metal film hermetically arranged at the window has a thickness of not more than 10 mm.

Alternatively, the high-pressure tank is capable of being introduced with a gas with a pressure of 1 bar to 15 bar, and the high-pressure tank is capable of operating in a gas sealing mode or a gas circulation mode.

Alternatively, the time projection chamber detector includes a micro-pattern gas detector, which is arranged inside the high-pressure tank on a side close to the window; one end, close to the window, of the micro-pattern gas detector is connected with a time projection chamber readout electronics, and one end, away from the window, of the micro-pattern gas detector is provided with the field cage.

Alternatively, the micro-pattern gas detector can be suitable for a high-pressure environment, and employs a gas electron multiplier (GEM/THGEM (thick gas electron multiplier)), a micro mesh gaseous structure (Micromegas), a double micro mesh gaseous structure (DMM), or a micro-resistive well-type detector (µRWELL).

Alternatively, the gamma calorimeter includes a pixel semiconductor detector arranged between the field cage and the inner wall of the high-pressure tank; the pixel semiconductor detector is made of cadmium zinc telluride, cadmium telluride or perovskite material, and has a pixel unit size ranging from 0.1 mm to 10 mm; and a single layer of the pixel semiconductor detector has a thickness ranging from 5 mm to 30 mm, and multiple layers of pixel semiconductor detectors are able to be arranged to improve detection efficiency.

Alternatively, the gamma calorimeter includes a scintillation crystal array and a photoelectric readout detector which are arranged between the field cage and the inner wall of the high-pressure tank; the scintillation crystal array is formed by splicing a plurality of crystal unit arrays. Each crystal unit is cerium-activated lanthanum bromide crystal, lanthanum bromide crystal, sodium iodide crystal, or cesium iodide crystal, and the scintillation crystal array is coupled with a photomultiplier detector or a multi-anode photomultiplier tube as photoelectric signal readout.

Alternatively, the gas is a single component gas including carbon tetrafluoride or methane.

Alternatively, the gas is a mixture of an inert gas and a polyatomic molecule gas. The inert gas is argon, neon or xenon, and the polyatomic molecular gas is carbon dioxide, isobutane, carbon tetrafluoride, methane or ethane.

Compared with the prior art, the present disclosure has the following technical effects:
By using the time projection chamber technology based on an advanced gas detector, and combining a pixel semiconductor detector or a high-resolution scintillator calorimeter, the high-accuracy measurement of Compton-scattered electrons and gamma is achieved, and the accurate measurement of gamma direction and energy is also achieved. Specifically, compared with the traditional schemes of solid Compton scatterer (such as a scintillator and a semiconductor), the high-accuracy measurement of the angle and energy of the Compton-scattered electrons is achieved, and a Compton scattering plane is determined to uniquely position a gamma incident direction. Compared with other time projection chamber schemes, the present disclosure employs a micro-pattern gas detector with high energy and high position resolution, which can achieve high-accuracy measurement of gamma energy and gamma incident direction by cooperating with a novel pixel semiconductor detector or a high-resolution scintillator calorimeter.

### BRIEF DESCRIPTION OF THE DRAWINGS

To describe the technical solutions of the embodiments of the present disclosure or in the prior art more clearly, the following briefly introduces the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic structural diagram of a high-resolution Compton gamma camera according to the present disclosure;
FIG. 2 is a schematic structural diagram of a high-pressure tank according to the present disclosure;
FIG. 3 is another schematic structural diagram of a high-pressure tank in another embodiment according to the present disclosure;
FIG. 4 is a schematic diagram of a time projection chamber detector according to the present disclosure;
FIG. 5 is a schematic diagram of a pixel semiconductor detector according to the present disclosure;
FIG. 6 is a schematic diagram of a scintillation crystal array and a photoelectric readout detector according to the present disclosure; and
FIG. 7 is a structural schematic diagram of a scintillation crystal array and a photoelectric readout detector in another embodiment according to the present disclosure.

The reference numerals: 1-high-pressure tank; 2-window; 3-metal film; 4-flange interface; 5-time projection chamber detector; 501-micro-pattern gas detector; 502-time projection chamber readout electronics; 503-field cage; and 6-gamma calorimeter.

### DETAILED DESCRIPTION OF THE EMBODIMENTS

The following clearly and completely describes the technical solutions in the embodiments of the present disclosure with reference to the accompanying drawings in the embodiments of the present disclosure. Apparently, the described embodiments are merely a part rather than all of the embodiments of the present disclosure. All other embodiments obtained by those of ordinary skill in the art based on the embodiments of the present disclosure without creative efforts shall fall within the scope of protection of the present disclosure.

The present disclosure aims to provide a high-resolution Compton gamma camera to solve the problems in the prior art and achieve the high-accuracy measurement of Compton-scattered electrons and gamma ray, and the accurate measurement of gamma direction and energy, thus providing a key technical support for astronomical observation, radiation therapy, source term detection and other applications.

In order to make the objectives, features and advantages of the present disclosure more clearly, the present disclosure is further described in detail below with reference to the accompanying drawings and specific embodiments.

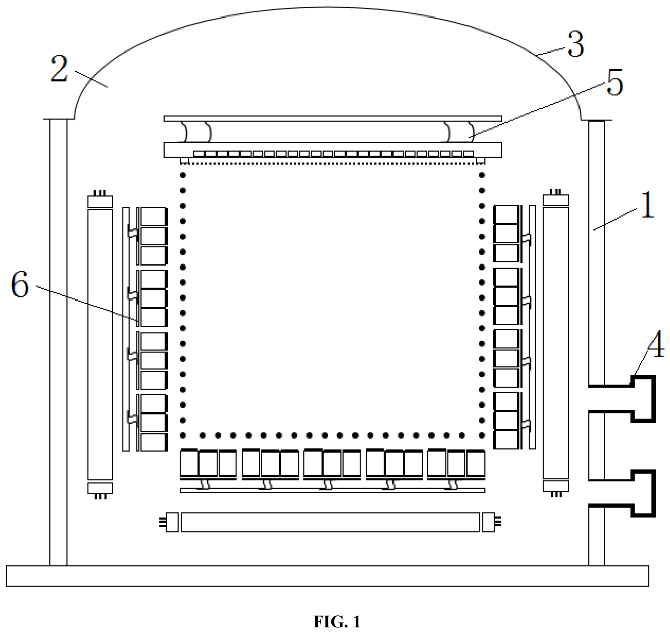

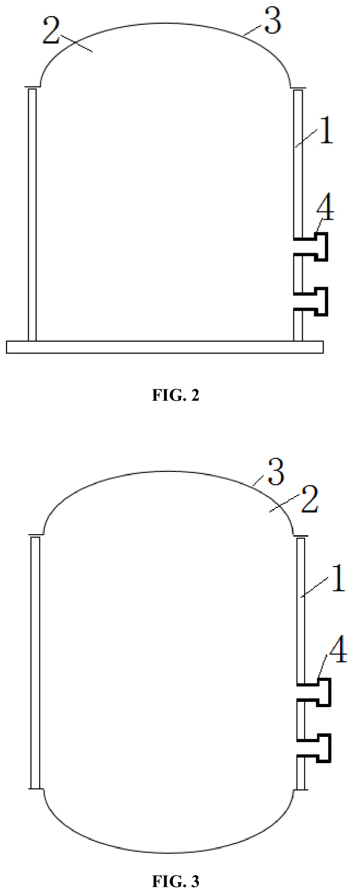

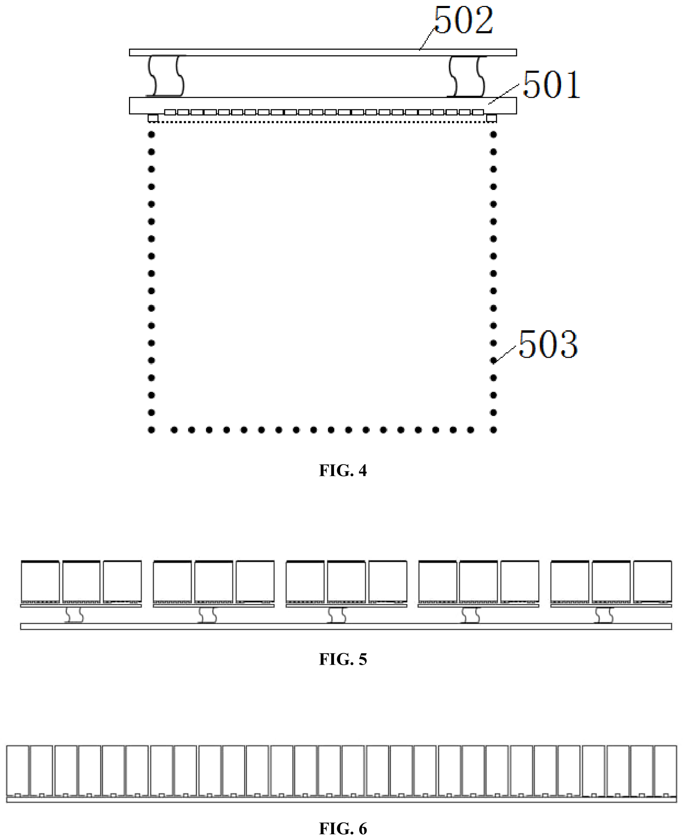

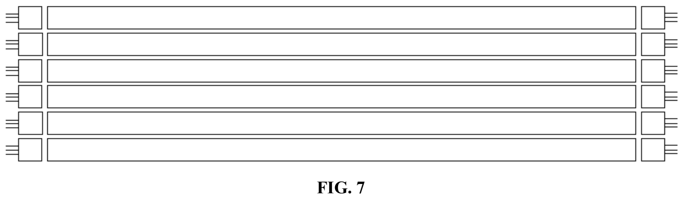

The present disclosure provides a high-resolution Compton gamma camera, as shown in FIGs. 1-7, including a high-pressure tank 1. One end of the high-pressure tank 1 is provided with a window 2, and a metal film 3 with a thickness not more than 10 mm is hermetically arranged at the window 2, the metal film 3 is made of stainless steel, titanium alloy, aluminum alloy, carbon fibers, etc. A sidewall or bottom of the high-pressure tank 1 is formed with multiple flange interfaces 4 which can be configured for extracting a detector gas, a high-voltage power supply and an electronic signal. A gas with a pressure of 1 bar to 15 bar can be introduced into the high-pressure tank 1, so that the high-pressure tank 1 can operate in a gas sealing mode or a gas circulation mode when in use. The gas can be a single component gas including carbon tetrafluoride or methane, or a mixture of an inert gas and a polyatomic molecule gas. The inert gas can be argon, neon, or xenon, and the polyatomic molecule gas can be carbon dioxide, isobutane, carbon tetrafluoride, methane, or ethane. A time projection chamber detector 5 is fixedly arranged inside the high-pressure tank 1, the time projection chamber detector 5 includes a micro-pattern gas detector 501. The micro-pattern gas detector 501 is arranged inside the high-pressure tank 1 on a side close to the window 2. One end, close to the window 2, of the micro-pattern gas detector 501 is in communication with a time projection chamber readout electronics 502, and one end, away from the window 2, of the micro-pattern gas detector 501 is provided with a field cage 503 which is composed of thin metal wires or metal strips and is generally in a double-layer structure to improve the uniformity of an electric field. The micro-pattern gas detector is used as a signal readout detector, the selected micro-pattern gas detector 501, such as a gas electron multiplier, a micro mesh gaseous structure, a double micro mesh gaseous structure, a micro-resistive well-type detector, can be suitable for a high-pressure environment, and can achieve the measurement of the three-dimensional tracks and energy of the electrons that are converted and scattered by gamma ray Compton scattering. The micro-pattern gas detector 501 employs two-dimensional cross-strip readout or pixel readout, and a spacing between adjacent readout strips or pixels generally ranges from 0.1 mm to 10 mm. A gamma calorimeter 6 is arranged between the field cage 503 of the time projection chamber detector 5 and the inner wall of the high-pressure tank 1 to measure positions and energy of Compton-scattered gamma and leaked electrons.

Furthermore, preferably, the gamma calorimeter 6 includes a pixel semiconductor detector arranged between the field cage 503 and the inner wall of the high-pressure tank 1. The pixel semiconductor detector is made of cadmium zinc telluride, cadmium telluride or perovskite material, and has a pixel unit size ranging from 0.1 mm to 10 mm. The pixel semiconductor detector has a single layer thickness ranging from 5 mm to 30 mm. When in use, a large sensitive area is usually achieved by splicing multiple units, and then multiple layers are arranged to ensure sufficient detection efficiency. In addition to the above structure, the gamma calorimeter 6 may also include a scintillation crystal array and a photoelectric readout detector. The scintillation crystal array is formed by splicing multiple crystal unit arrays, where each crystal unit is cerium-activated lanthanum bromide crystal, lanthanum bromide crystal, sodium iodide crystal or cesium iodide crystal, and the scintillation crystal array is coupled with a photomultiplier detector or a multi-anode photomultiplier tube as photoelectric signal readout. Pixel readout generally employs a coding multiplexing mode to reduce the readout scale. A width of the crystal unit generally ranges from 3 mm to 20 mm, and the thickness of a single layer ranges from 5 mm to 30 mm. When in use, multiple layers are generally provided to ensure sufficient detection efficiency. In addition, in another embodiment, considering that some high-energy gamma rays cannot be completely absorbed by the gamma calorimeter 6, a scintillator detector with a larger size is added at a bottom end or an outer side of the gamma calorimeter 6 to serve as an absorption detector for gamma residual energy, which also take on the function of an anti-coincidence detector.

In a different embodiment, each of two symmetric ends of the high-pressure tank 1 is provided with a window 2, and a metal film 3 with a thickness not more than 10 mm is hermetically arranged at the window 2. The complete machine system of the present disclosure can be formed by combining a high-pressure tank 1 with different structures, the time projection chamber detector 5 and the gamma calorimeter 6.

In the description of the present disclosure, it needs to be understood that the orientation or position relationship indicated by terms "center", "top", "bottom", "left", "right ", "vertical", "horizontal", "inside" and "outside" is based on the orientation or position relationship shown in the drawings only for convenience of description of the present disclosure and simplification of description rather than indicating or implying that the device or element referred to must have a particular orientation, be constructed and operate in a particular orientation, and thus are not to be construed as limiting the present disclosure. Furthermore, the terms "first" and "second" are used for descriptive purposes only and are not to be construed as indicating or implying relative importance.

Specific examples are used herein for illustration of the principles and embodiments of the present disclosure. The description of the embodiments is merely configured to help illustrate the method and its core principles of the present disclosure. In addition, a person of ordinary skill in the art can make various modifications in terms of specific embodiments and scope of application in accordance with the teachings of the present disclosure. In conclusion, the content of this specification shall not be construed as a limitation to the present disclosure.

## Claims

1. A high-resolution Compton gamma camera, comprising:
a high-pressure tank, wherein the high-pressure tank is provided with a window, a metal film is hermetically arranged at the window, and a sidewall or bottom of the high-pressure tank is formed with a plurality of flange interfaces;
a time projection chamber detector, wherein the time projection chamber detection is arranged inside the high-pressure tank, and configured to measure three-dimensional tracks and energy of electrons that are converted and scattered by gamma ray Compton scattering; and
a gamma calorimeter, wherein the gamma calorimeter is located between a field cage of the time projection chamber detector and an inner wall of the high-pressure tank, and configured to measure leakage positions and energy of Compton-scattered gamma and electrons.

2. The high-resolution Compton gamma camera according to claim 1, wherein the window is formed on one end of the high-pressure tank, and the metal film hermetically arranged at the window has a thickness of not more than 10 mm.

3. The high-resolution Compton gamma camera according to claim 1, wherein each of two symmetrical ends of the high-pressure tank is provided with the window, and the metal film hermetically arranged at the window has a thickness of not more than 10 mm.

4. The high-resolution Compton gamma camera according to claim 1, wherein the high-pressure tank is capable of being introduced with a gas with a pressure of 1 bar to 15 bar, and the high-pressure tank is capable of operating in a gas sealing mode or a gas circulation mode.

5. The high-resolution Compton gamma camera according to claim 1, wherein the time projection chamber detector comprises a micro-pattern gas detector, which is arranged inside the high-pressure tank on a side close to the window; one end, close to the window, of the micro-pattern gas detector is connected with a time projection chamber readout electronics, and one end, away from the window, of the micro-pattern gas detector is provided with the field cage.

6. The high-resolution Compton gamma camera according to claim 5, wherein the micro-pattern gas detector employs a gas electron multiplier, a micro mesh gaseous structure, a double micro mesh gaseous structure, or a micro-resistive well-type detector.

7. The high-resolution Compton gamma camera according to claim 1, wherein the gamma calorimeter comprises a pixel semiconductor detector arranged between the field cage and the inner wall of the high-pressure tank; the pixel semiconductor detector is made of cadmium zinc telluride, cadmium telluride or perovskite material, and has a pixel unit size ranging from 0.1 mm to 10 mm; and a single layer of the pixel semiconductor detector has a thickness ranging from 5 mm to 30 mm, and multiple layers of pixel semiconductor detectors are able to be arranged to improve detection efficiency.

8. The high-resolution Compton gamma camera according to claim 1, wherein the gamma calorimeter comprises a scintillation crystal array and a photoelectric readout detector which are arranged between the field cage and the inner wall of the high-pressure tank; the scintillation crystal array is formed by splicing a plurality of crystal unit arrays, wherein each crystal unit is cerium-activated lanthanum bromide crystal, lanthanum bromide crystal, sodium iodide crystal, or cesium iodide crystal, and the scintillation crystal array is coupled with a photomultiplier detector or a multi-anode photomultiplier tube as photoelectric signal readout.

9. The high-resolution Compton gamma camera according to claim 4, wherein the gas is a single component gas comprising carbon tetrafluoride or methane.

10. The high-resolution Compton gamma camera according to claim 4, wherein the gas is a mixture of an inert gas and a polyatomic molecule gas, wherein the inert gas is argon, neon or xenon, and the polyatomic molecular gas is carbon dioxide, isobutane, carbon tetrafluoride, methane or ethane.
